Europäisches Patentamt

European Patent Office

Office européen des brevets

(19)

(11) Publication number: **0 251 317 B1**

# EUROPEAN PATENT SPECIFICATION

(45) Date of publication of patent specification: **29.05.91**    (51) Int. Cl.⁵: **G21C 3/32**

(21) Application number: **87109526.1**

(22) Date of filing: **02.07.87**

(54) Spring retainer apparatus for facilitating loading of fuel rods into a nuclear fuel assembly.

(30) Priority: **03.07.86 US 881996**

(43) Date of publication of application:
**07.01.88 Bulletin 88/01**

(45) Publication of the grant of the patent:
**29.05.91 Bulletin 91/22**

(84) Designated Contracting States:
**DE ES IT SE**

(56) References cited:
**DE-A- 2 520 345**
**US-A- 3 380 890**
**US-A- 3 892 027**

(73) Proprietor: **WESTINGHOUSE ELECTRIC COR-
PORATION**
**Westinghouse Building Gateway Center**
**Pittsburgh Pennsylvania 15222(US)**

(72) Inventor: **Demario, Edmund Emory**
**2816 Orlando Drive**
**Pittsburgh Pennsylvania 15235(US)**

(74) Representative: **Patentanwälte Dipl.-Ing. R.
Holzer Dipl.-Ing. (FH) W. Gallo**
**Ludwigstrasse 26**
**W-8900 Augsburg(DE)**

## Description

The present invention relates generally to nuclear reactors and, more particularly, to a spring retainer apparatus for facilitating the loading of fuel rods into a grid of a fuel assembly without scratching their outer surfaces.

Basically, a nuclear fuel assembly consists of a unitary structure, or skeleton, and a plurality of fuel rods loaded into the skeleton and supported therein in parallel spaced relationship with respect to each other. Support for the fuel rods is provided by transverse grids forming part of the skeleton and usually composed of straps which are interlaced in an egg-crate-like manner to define open cells for receiving the fuel rods, and which straps have thereon fuel-rod detents in the form of springs and dimples protruding into the respective cells so as to engage and hold the fuel rods therein against vibration and lateral displacement thereof. In order that these detents can perform their supporting function effectively, they are designed to exert upon the fuel rods a considerable restraining force which, while beneficial and desired on the one hand, poses a problem on the other, namely, one arising during loading of the fuel rods into the skeleton when the fuel rods being inserted through the grid cells and making physical contact with the detents therein are at great risk of being scratched. For reasons well known in the art, scratching of the outer surfaces of fuel rods is highly undesirable not only because it mars the fuel rods but, more important, because it causes surface material scraped from fuel rods to enter the reactor coolant loop and, in addition, tends to aggravate corrosion of fuel rod cladding during use.

Various approaches to solving this problem have been made in the prior art, most of them seeking to prevent fuel-rod scratching by deflecting the grid springs to retracted positions thereof and by retaining them therein, and hence out of the path of the fuel rods, during insertion of the latter into the grid cells.

Examples of such approaches are found in U.S. patent specifications Nos. 3.380.890, 3.892.027, 3982994 and 4058224. US-A-3.380.890 discloses the use of a pinching device to clamp together pairs of back-to-back springs in a fuel rod spacer grid and thereby providing room for the insertion of fuel rods through the grid openings. This document, however, does not disclose any constructional details of the pinching device.

The present invention has for its principal object to provide a spring retainer apparatus specifically for use with spacer grids utilizing fuel-rod supporting grid springs which are arranged in pairs back-to-back.

The invention accordingly resides in a spring retainer apparatus for facilitating the loading of fuel rods into a nuclear fuel assembly including at least one fuel-rod spacer grid composed of interleaved straps which define a plurality of open cells each for receiving one of the fuel rods, at least some of said straps being paired side-by-side adjacent each other and having thereon springs which are paired back-to-back and project from the associated straps into the cells located at opposite sides of the respective pair of straps, the springs in each pair of springs being shaped so as to normally assume expanded positions in which they are displaced away from one another for engagement thereof with fuel rods when received in the respective cells, and being deflectible to retracted positions in which they are displaced toward one another to allow fuel rods to be inserted into the respective cells without making physical contact with said springs, characterized in that said spring retainer apparatus comprises a plurality of elongate holder bars each supporting a plurality of elongate members which extend from the associated holder bar in substantially parallel spaced relationship with respect to each other, and each of which elongate members terminates in a bifurcated end portion defining at least one pair of fingers adapted to receive therebetween, and to hold in said retracted position, one pair of said springs, said holder bars being positionable each along a longitudinal edge of one of the pairs of straps so as to be laterally spaced from the positions occupied by fuel rods when received in the adjacent cells, and the elongate members on each holder bar being spaced apart such as to be alignable, upon positioning of the holder bar along one of the pairs of straps, with the respective pairs of springs thereon to enable engagement of the bifurcated end portions of said elongate members with said respective pairs of springs and retention of the latter in said retracted positions thereof.

Preferably, the bifurcated end of each elongate members defines two pairs of fingers, the two pairs of fingers being spaced apart such as to engage the associated pair of springs at two locations displaced from each other along the springs. The fingers of each pair are divergently tapered adjacent the distal ends thereof so as to define a convergently tapered entrance to the space between the fingers, the angle of divergence between the fingers preferably being such as to cause the pair of springs being engaged therewith to be deflected to the retracted position thereof.

The plurality of elongate holder bars is divided into two groups forming part of two spring retainer assemblies each of which includes a handle bar which interconnects the holder bars of the associated spring retainer assembly, each at one end thereof, and holds them in substantially parallel spaced relationship with respect to one another corresponding essentially to the parallel spaced relationship of the grid straps. The holder bars of the two spring retainer assemblies have mating means which enable the holder bars to be positioned with respect to each other, and thereby enable said spring retainer assemblies to be applied to said spacer grid, in criss-cross fashion permitting engagement of the bifurcated end portions of the various elongate members with all the pairs of springs formed on the spacer-grid straps. The said mating means preferably are notches formed in the holder bars of the respective spring retainer assemblies at locations allowing the notches in the holder bars of one spring retainer assembly to be aligned with the notches in the holder bars of the other spring retainer assembly, and thereby enabling the holder bars of the two spring retainer assemblies to be mated in said criss-cross fashion.

A preferred embodiment of the invention will now be described, by way of example only, with reference to the accompanying drawings, in which:

Figure 1 is an elevational view, with parts broken away and sectioned for clarity, of a BWR nuclear fuel assembly in conjunction with which the spring retainer apparatus of the invention can be utilized for loading fuel rods into the grids of the fuel assembly;

Fig. 2 is an enlarged top plan view of the fuel assembly, as seen along line 2--2 of Fig. 1;

Fig. 3 is an enlarged bottom plan view of the fuel assembly, as seen along line 3--3 of Fig. 1;

Fig. 4 is a cross-sectional view of the fuel assembly taken along line 4--4 of Fig. 1 and showing the fuel rod bundle of the fuel assembly separated into mini-bundles by the water cross, a grid associated with one of the mini-bundles being shown in full, while the grids associated with the other three mini-bundles are shown in outline;

Fig. 5 is another cross-sectional view of the fuel assembly, as taken along line 5--5 of Fig. 1;

Fig. 6 is an enlarged top plan view of the upper right-hand grid seen in Fig. 4, showing the springs of the grid in their normal or expanded positions in which they engage and, together with opposite dimples, hold the fuel rods extending through the cells of the grid;

Fig. 7 is a side elevational view of the grid, as seen along line 7--7 of Fig. 6;

Fig. 8 is a top plan view similar to Fig. 6 but showing the pairs of assemblies of the spring retainer apparatus installed on the grid so as to hold its springs in retracted positions;

Fig. 9 is a side elevational view, partly sectioned, of the grid and spring retainer assemblies, as seen along line 9--9 of Fig. 8;

Fig. 10 is a bottom plan view of the grid and spring retainer assemblies, as seen along line 10--10 of Fig. 9;

Fig. 11 is a top plan view similar to Fig. 8 but showing the spring retainer assemblies removed from the grid;

Fig. 12 is a top plan view of one of the pair of spring retainer assemblies shown in Fig. 11;

Fig. 13 is a top plan view of the other of the pair of spring retainer assemblies shown in Fig. 11;

Fig. 14 is a side elevational view, partly in section, of said one spring retainer assembly, as seen along line 14--14 of Fig. 12;

Fig. 15 is another side elevational view, partly in section, similar to Fig. 14 but taken along line 15--15 of Fig. 12;

Fig. 16 is a side elevational view, partly in section, of the other spring retainer assembly, as taken along line 16--16 of Fig. 13;

Fig. 17 is another side elevational view, partly in section, similar to Fig. 16, but taken along line 17--17 of Fig. 13;

Fig. 18 is a bottom plan view of a fragmentary portion of the one spring retainer, as seen along line 18--18 of Fig. 14;

Fig. 19 is an enlarged fragmentary view, partly in section, of a lower bifurcated end of one depending member of one of the spring retainer assemblies, as seen along line 19--19 of Fig. 14;

Fig. 20 is a view similar to Fig. 19 but illustrating how the lower bifurcated end of the spring retainer assembly member acts upon a pair of grid springs in moving them from their expanded position, shown in full, to their retracted position, shown in phantom;

Fig. 21 is a fragmentary elevational view of a fixture having dummy rods for actuating the grid springs to their retracted positions; and

Fig. 22 is a view similar to Fig. 19 but showing an alternative form of the lower bifurcated end of a spring retainer assembly member used in conjunction with the fixture of Fig. 21 to retain a pair of springs in their retracted positions after actuated thereto by the fixture.

In the following description, like reference characters designate like or corresponding parts throughout the several views of the drawings, and terms such as "forward", "rearward", "left", "right", "upwardly", "downwardly", and the like are employed as words of convenience not to be construed as limiting terms.

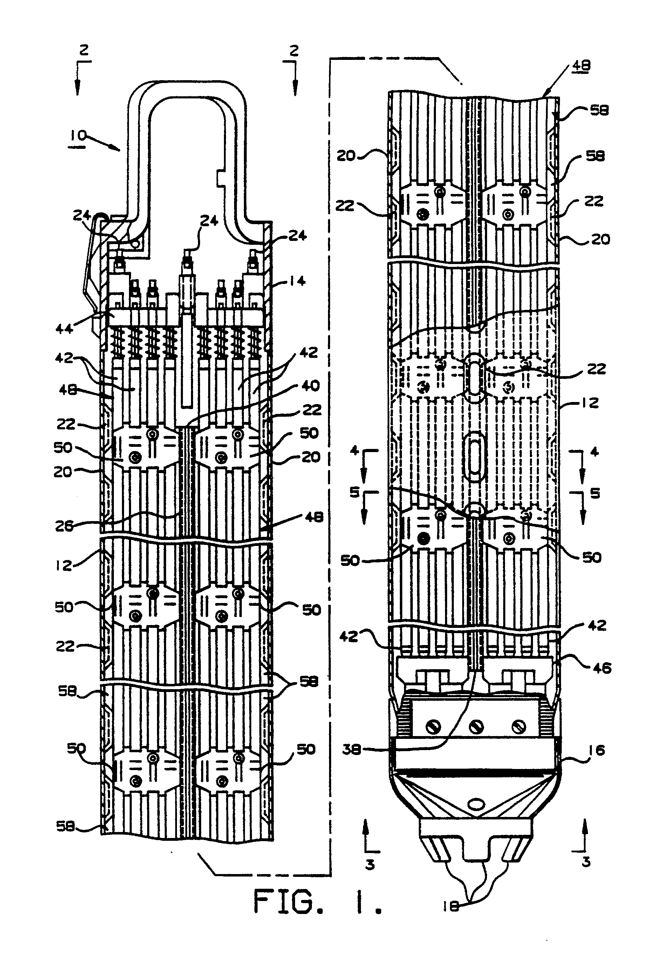

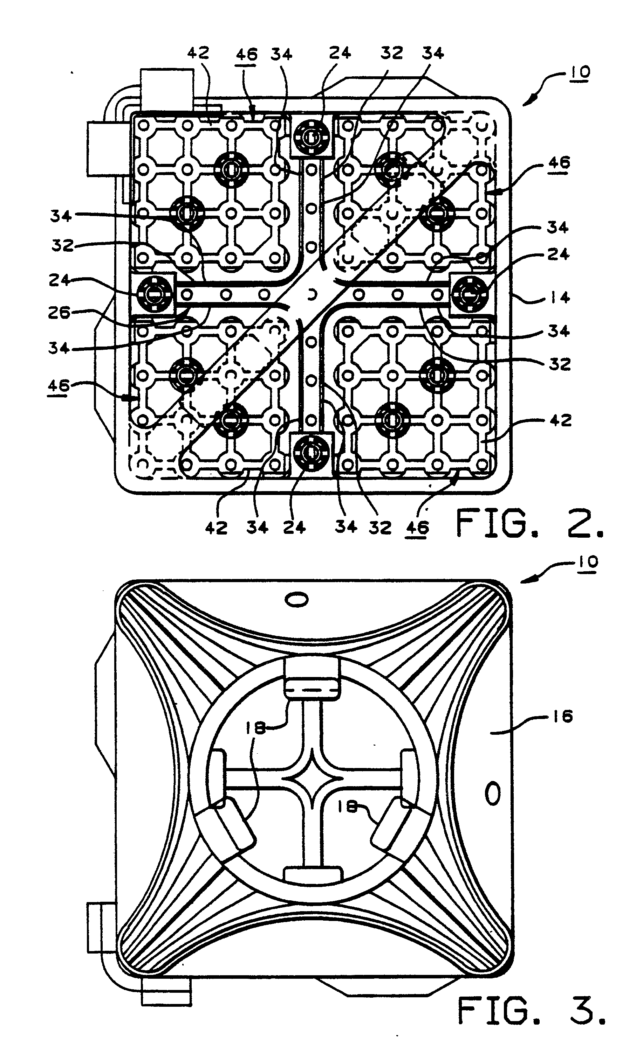

Referring now to the drawings, and to Figs. 1 to 3 in particular, the nuclear fuel assembly generally designated with numeral 10 is of the kind utilized in nuclear power reactors of the boiling-water type. The fuel assembly 10 includes an elongate outer tubular flow channel 12 which extends substantially throughout the length of the fuel assembly 10 and is joined at its opposite ends to an upper support fixture or top nozzle 14 and a lower base or bottom nozzle 16. The bottom nozzle 16 which serves as an inlet for coolant flow into the outer channel 12 of the fuel assembly 10 includes a plurality of legs 18 for guiding the bottom nozzle 16 and the fuel assembly 10 into a reactor core support plate (not shown) or into fuel storage racks, for example, in a spent fuel pool.

The outer flow channel 12, generally rectangular in cross-section, is made up of four interconnected vertical walls 20 each displaced about ninety degrees from the next. Formed in a spaced-apart relationship in, and extending in a vertical row at a central location along, the inner surface of each wall 20 of the outer flow channel 12 is a plurality of structural ribs 22. The outer flow channel 12, and thus the ribs 22 formed therein, are preferably formed from a metallic material, such as an alloy of zirconium known as Zircaloy. Above the upper ends of the structural ribs 22, a plurality of upwardly extending attachment studs 24 fixed on the walls 20 of the outer flow channel 12 are used to interconnect the top nozzle 14 to the channel 12.

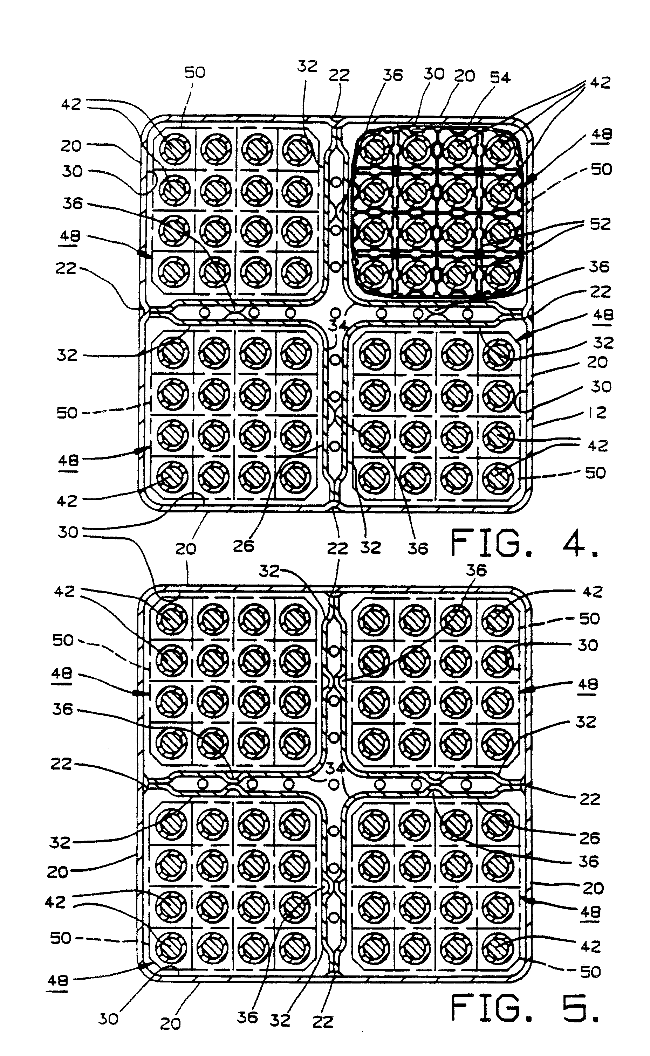

In order to improve neutron moderation and economy, a hollow water cross 26 (Figs. 1, 2, 4) is provided which extends axially through the outer channel 12 so as to provide an open inner channel 28 for subcooled moderator flow through the fuel assembly 10, and to divide the fuel assembly into four separate elongate compartments 30. The water cross 26 has a plurality of four radial panels 32 composed of four elongate, generally L-shaped metal angles or sheet members 34 which extend substantially along the entire length of the channel 12. The sheet members 34 of each panel 32 are interconnected and spaced apart by a series of elements in the form of dimples 36 formed therein and extending therebetween. The dimples 36 are arranged in opposing pairs which contact each other along the sheet members 34 so as to maintain the latter properly spaced from one another. The pairs of contacting dimples 36 are connected together, such as by welding, in order to ensure that the spacing between the sheet members 34 forming the panels 32 of the central water cross 26 is accurately maintained.

The hollow water cross 26 is secured to the angularly displaced walls 20 of the outer channel 12. Preferably, the panels 32 of the water cross 26 are connected, e.g., welded along their outer ends to the structural ribs 22 in order to securely retain the water cross 26 in its desired central position within the fuel assembly 10. The inner ends of the panels together with the outer ends thereof define the inner central cruciform channel 28 which extends throughout the length of the hollow water cross 26, the latter having a lower flow inlet end 38 and an opposite upper flow outlet end 40 each communicating with the inner channel 28 so as to provide subcoolant flow therethrough.

Disposed within the channel 12 is a bundle of fuel rods 42 which, in the illustrated embodiment, number sixty-four and form an 8 x 8 array. The fuel rod bundle is, in turn, divided into four mini-bundles by the water cross 26. The fuel rods 42 of each mini-bundle, such being sixteen in number in a 4 x 4 array, extend in laterally spaced-apart relationship between an upper tie plate 44 and a lower tie plate 46. The fuel rods 42 in each mini-bundle are connected to the upper and lower tie plates 44,46 and, together therewith, constitute a separate fuel rod subassembly 48 within each of the compartments 30 of the channel 12. A plurality of spacer grids 50 axially spaced along the fuel rods 42 of each fuel rod subassembly 48 and each composed of interleaved inner straps 52 and an outer strap 54 serve to maintain the fuel rods in their laterally spaced relationships. The lower and upper tie plates 44,46 of the respective fuel rod subassemblies 48 have flow openings 56 therethrough for allowing coolant fluid to flow into and from the separate fuel rod subassemblies. Also, coolant flow paths provide flow communication between the fuel rod subassemblies 48 in the respective separate compartments 30 of the fuel assembly 10 through a plurality of openings 58 formed between the structural ribs 22. Coolant flow through the openings 58 serves to equalize the hydraulic pressure between the four separate compartments 30, thereby minimizing the possibility of thermal hydrodynamic instability between the separate fuel rod subassemblies 48.

Apparatus for Loading Fuel Rods into Grids

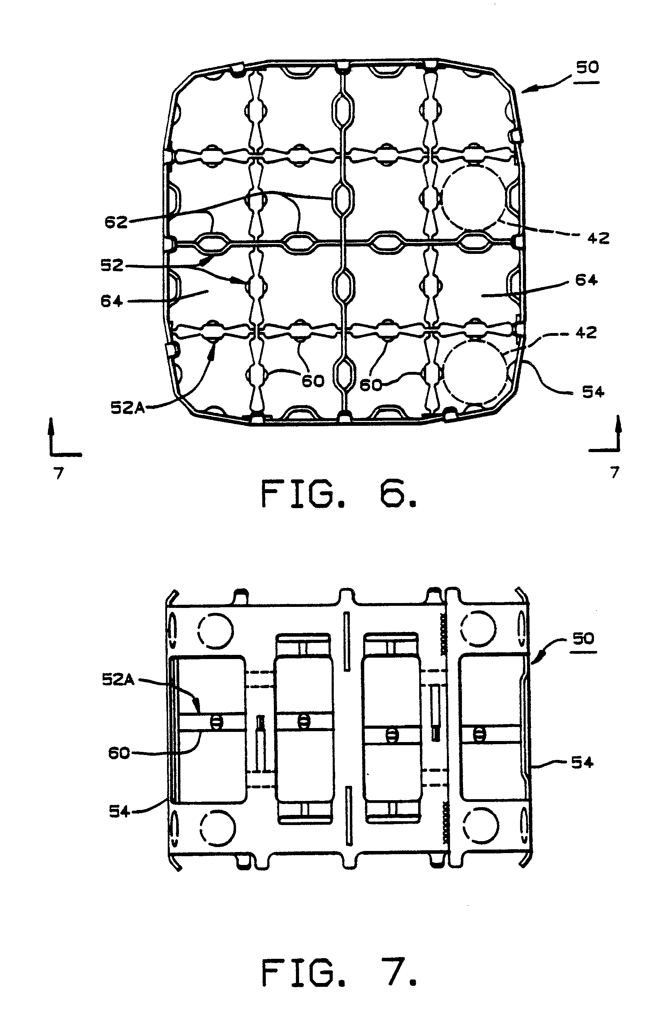

During loading of the fuel rods 42, and as the latter are inserted through the fuel assembly grid 50, springs 60 and dimples 62 formed on the inner straps 52 and projecting therefrom into the cells 64 defined by the interleaved straps (see Figs. 6 and 7) will normally rub against and scratch the outer surfaces of the fuel rods. This not only blemishes the fuel rods with respect to the outer appearance thereof but also causes surface material to be released into the coolant flow through the fuel assembly 10 and accelerates corrosion at the scratch sites.

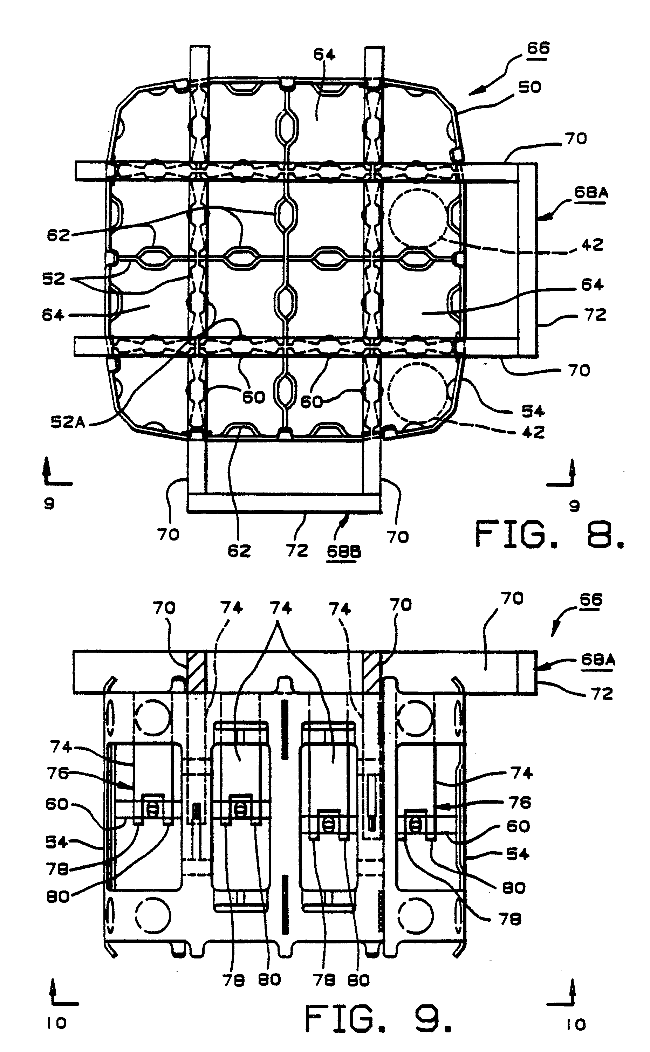

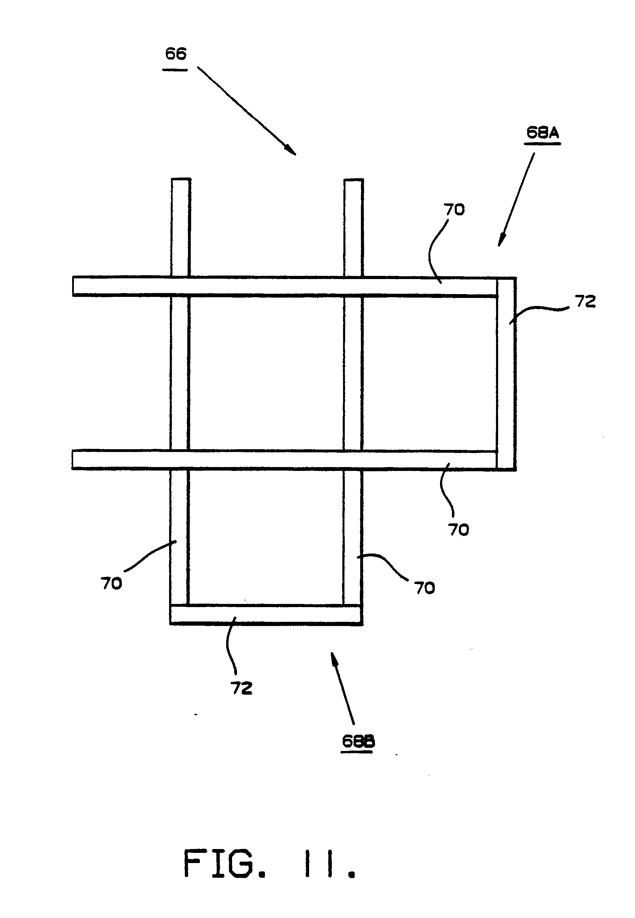

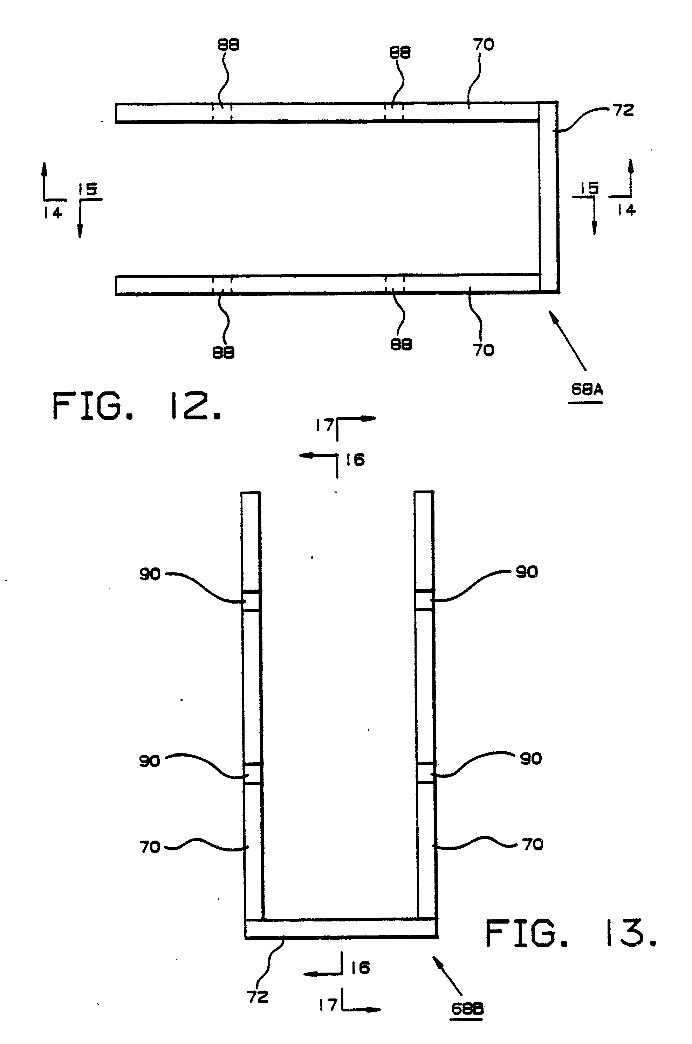

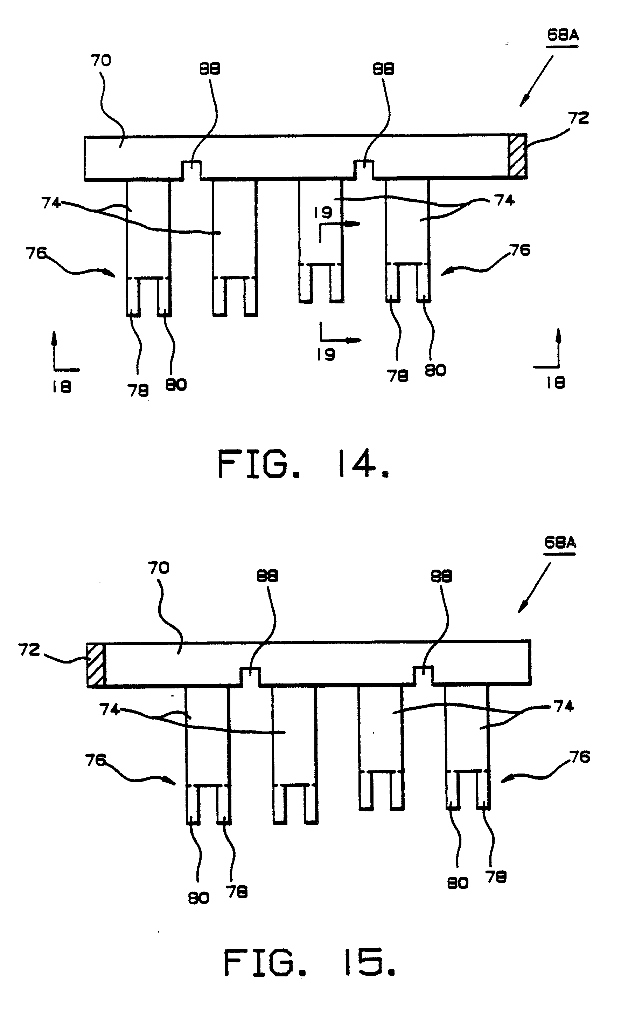

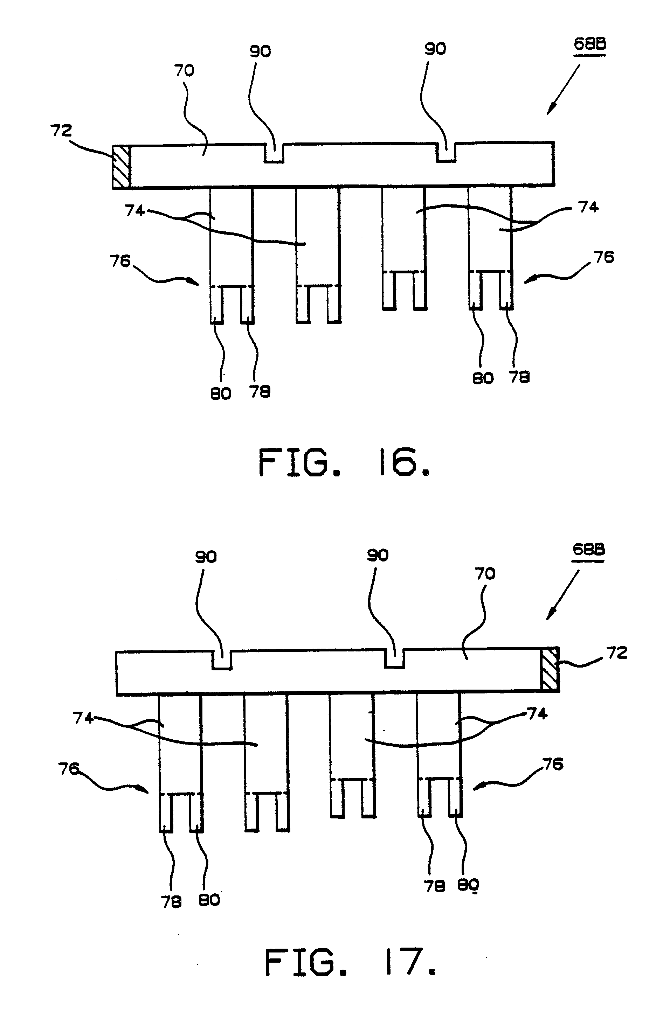

Referring now particularly to Figs. 8 to 20, in accordance with the invention there is provided a spring retainer apparatus, generally designated 66, for facilitating the loading of fuel rods into the cells 64 of the fuel assembly grid 50 in a manner which minimizes marring and scratching of their outer surfaces. It will be noted that some of the inner straps 52A are paired substantially parallel with respect to each other and side-by-side so that the springs 60 thereon are back-to-back with respect to each other, with the springs on one strap of each pair projecting into the cells 64 on one side of the pair of straps, and the springs on the other strap of the pair projecting into the cells on the opposite side of said pair. As seen best from Fig. 6, the springs 60 of each pair are configured so as to normally assume expanded positions in which they are displaced away from one another and able to engage fuel rods when inserted in the respective cells 64. By means of the apparatus 66 embodying the invention, the springs 60 of each pair can be deflected to retracted positions in which they are displaced toward one another so as to provide sufficient clearance for the fuel rods 42 to be inserted into the respective cells 64 without engaging the springs 60.

More particularly, and as seen from Figs. 8 to 17, the spring retainer apparatus 66 comprises a pair of first and second spring retainer assemblies 68A,68B which are substantially identical. Each of the spring retainer assemblies 68A,68B comprises a pair of elongate holder bars 70 and a handle bar 72 which interconnects the holder bars at one end of the respective assembly and in parallel spaced relationship with respect to each other such as to enable the holder bars 70 to be concurrently extended along and aligned with a pair of the grid straps 52A defining the pairs of springs 60. The cross-sectional dimensions of the holder bars 70 are such as to allow the latter to be extended between and spaced from positions occupied by fuel rods 42, when received in the cells 64, so that neither the bars 70 nor the springs 60 held in retracted positions by the assemblies 68 will engage or interfere with the fuel rods 42 during loading thereof.

In addition, each of the holder bars 70 of the spring retainer assemblies 68A,68B includes a plurality of depending members 74 corresponding in number to the number of pairs of springs 60 defined by the pair of straps 52A aligned with the particular holder bar 70. In the illustrated embodiment, each bar 70 has four depending members 74 to be aligned with four pairs of springs 60.

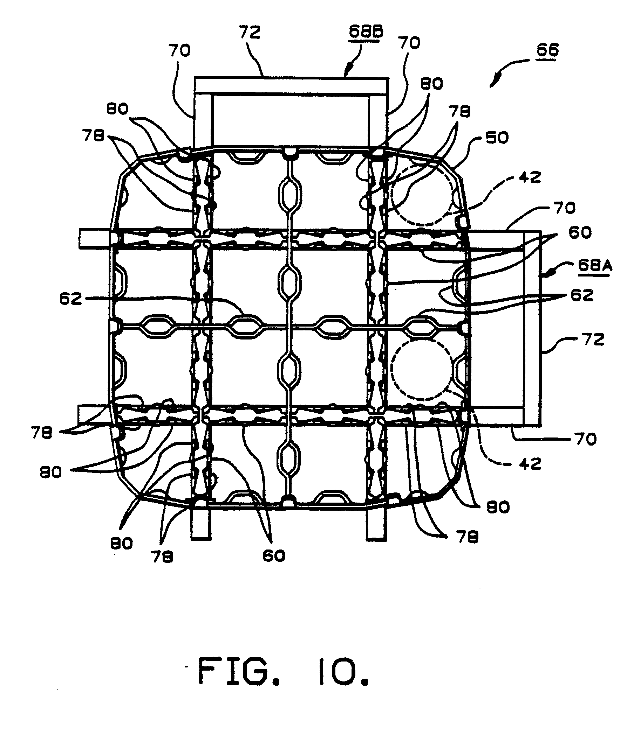

Each of the depending members 74 has a terminal end portion 76 configured such as to engage and deflect the springs 60 of one pair to their retracted positions when the associated holder bar 70 supporting the particular depending member 74 is aligned with and moved toward the pair of straps 52A aligned with the holder bar 70. Preferably, the depending members 74 on each holder bar 70 are rigidly connected to the latter and extends therefrom in substantially parallel spaced relationship with respect to each other. Each of the depending members 74 is an elongate post with a bifurcated end portion thereof forming the terminal end 76 of the member 74, which terminal end 76 defines two spaced pairs of spaced-apart fingers 78,80 adapted to receive the pair of springs 60 therebetween and to engage the spring pair at two locations displaced therealong, as depicted in Fig. 10, thereby to retain them in their retracted positions.

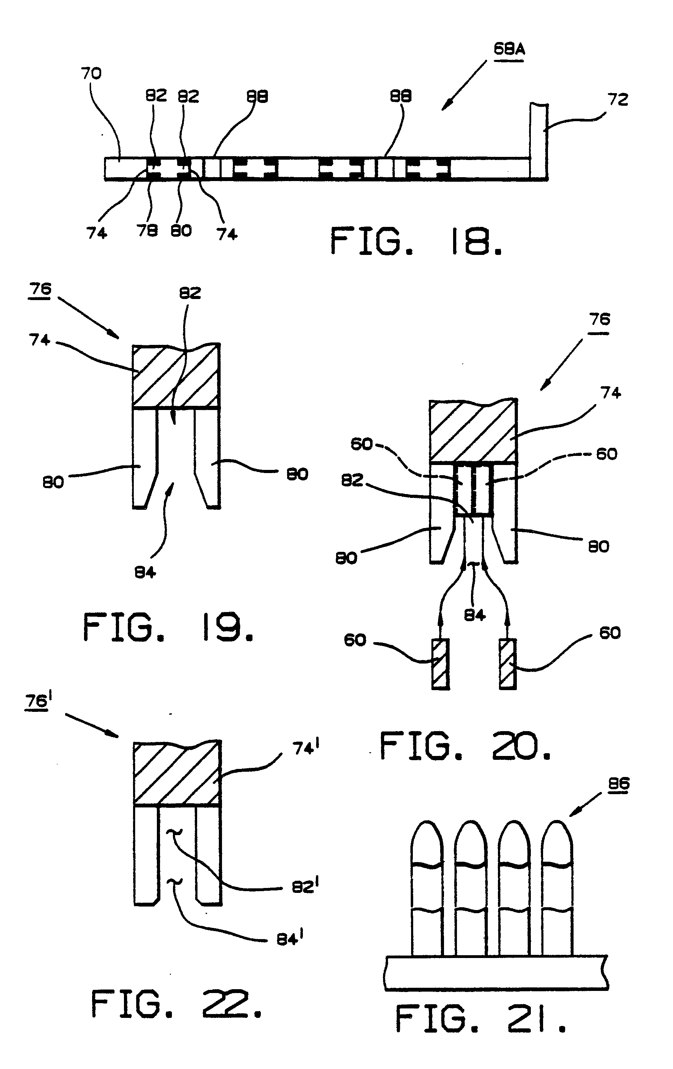

Various configurations are possible for defining the bifurcated ends 76 of the posts 74, the configurations shown in Figs. 19 and 20 being merely examples. Whatever the configuration or structure of the fingers 78,80 chosen, the important feature is that the bifurcated terminal end of each post 74 should define a pocket 82 adapted to receive therein the pair of springs 60 and to retain the latter in their retracted positions, as indicated in Fig. 20, and a convergently tapered entrance 84 to the pocket 82 for facilitating insertion of the springs 60 into the pocket.

In the preferred embodiment illustrated in Figs. 19 and 20, the tapered entrance 84 is of sufficient size (i.e., length and width) to cause deflection of the springs 60 from their normal expanded positions to their retracted positions during movement of the post 74 toward and into engagement with the springs 60, as depicted in Fig. 20.

In an alternative embodiment shown in Fig. 22, the tapered entrance 84' to the pocket 82' of each post 74' may be insufficient in size to cause such deflection of the springs 60, for which reason a fixture 86 of dummy fuel rods is provided for initial insertion of the latter into the grid cells 64 causing the springs 60 to be deflected to their retracted positions in which thereafter they are retained through engagement of the bifurcated terminal ends 76' of the posts 74' with the retracted springs.

Finally, the holder bars 70 of the respective first and second spring retainer assemblies 68A,68B have mating means permitting the assemblies to be superimposed one atop the other in criss-cross fashion and interconnected, as shown in Figs. 8 to 11, in alignment with all of the pairs of springs 60 defined by the straps 52A of the grid 50. The mating means on the holder bars 70 are in the form of aligned notches 88, 90 defined in the respective holder bars so that the notches 88 of the assembly 68A open downward and the notches 90 of assembly 68B open upward.

It will be observed that some of the posts 74 on the holder bars 70 are slightly larger than others. This is so because the sets of the four radial springs 60 in the different quadrants of the grid 50 are disposed at different levels within the grid, as seen from Figs. 7 and 9.

**Claims**

1. A spring retainer apparatus for facilitating the loading of fuel rods into a nuclear fuel assembly including at least one fuel-rod spacer grid (50) which is composed of interleaved straps (52,54) defining a plurality of open cells (64) each for receiving one of the fuel rods (42), at least some of said straps (52) being paired side-by-side adjacent each other and having thereon springs (60) which are paired back-to-back and project from the associated straps into the cells (64) located on opposite sides of the respective pair of straps, the springs in each pair of springs being shaped so as to normally assume expanded positions in which they are displaced away from one another for engagement thereof with fuel rods when received in the respective cells, and being deflectible to retracted positions in which they are displaced toward one another to allow fuel rods to be inserted into the respective cells without making physical contact with said springs, characterized in that said spring retainer apparatus (66) comprises a plurality of elongate holder bars (70) each supporting a plurality of elongate members (74) which extend from the associated holder bar in substantially parallel spaced relationship with respect to each other, and each of which elongate members terminates in a bifurcated end portion (76) defining at least one pair of fingers (78,80) adapted to receive therebetween, and to hold in said retracted position, one pair of said springs (60), said holder bars (70) being positionable each along a longitudinal edge of one of the pairs of straps (52) and so as to be laterally spaced from the positions occupied by fuel rods when received in the adjacent cells, and the elongate members (74) on each holder bar being spaced apart such as to be alignable, upon positioning of the holder bar along one of the pairs of straps, with the respective pairs of springs (60) thereon to enable engagement of the bifurcated end portions (76) of said elongate members (74) with said respective pairs of springs (60) and retention of the latter in said retracted positions thereof.

2. A spring retainer apparatus according to claim 1, characterized in that the bifurcated end portion (76) of each elongate member (74) defines two pairs of said fingers (78,80), said two pairs of fingers being spaced apart such as to engage the associated pair of springs (60) at two locations displaced from each other along the springs.

3. A spring retainer apparatus according to claim 1 or 2, characterized in that the fingers of said or each pair of fingers (78,80) are divergently tapered adjacent the distal ends thereof so as to define a convergently tapered entrance (84) to the space (82) between the fingers.

4. A spring retainer apparatus according to claim 3, characterized in that the fingers (78,80) of said or each pair are divergently tapered at an angle such as to deflect the pair of springs (60) received therebetween to said retracted position thereof.

5. A spring retainer apparatus according to claim 1, 2, 3 or 4, characterized in that said plurality of elongate holder bars (70) is divided into two groups forming two spring retainer assemblies (68A,68B) each including a handle bar (72) which interconnects the holder bars (70) of the associated spring retainer assembly (68A or 68B), each at one end thereof, and holds said holder bars in substantially parallel spaced relationship with respect to one another corresponding essentially to the parallel spaced relationship between the grid straps (52), the holder bars (70) of the two spring retainer assemblies (68A,68B) having mating means (88,90) which enable said holder bars to be positioned with respect to each other, and thereby enable said spring retainer assemblies to be applied to said spacer grid (50), in crisscross fashion permitting engagement of the bifurcated end portions (76) of said elongate members (74) with all pairs of springs (60) formed on the straps (52) of the spacer grid.

6. A spring retainer apparatus according to claim 5, characterized in that said mating means (88,90) are notches formed in the holder bars (70) of the respective spring retainer assemblies (68A,68B) at locations allowing the notches in the holder bars of one spring retainer assembly to be aligned with the notches in the holder bars of the other spring retainer assembly, and thereby enabling the holder bars of the two spring retainer assemblies to be mated in said criss-cross fashion.

## Revendications

1. Appareil de maintien de ressort pour faciliter le chargement de barres de combustible dans un assemblage combustible nucléaire comprenant au moins une grille d'espacement (50) de barres de combustible qui est composée de bandes entrelacées (52, 54) définissant une pluralité de cellules ouvertes (64) chacune destinée à recevoir l'une des barres de combustible (42), certaines au moins desdites bandes (52) étant appariées côte-à-côte au voisinage l'une de l'autre et ayant sur celles-ci des ressorts (60) qui sont appariés dos-à-dos et qui s'étendent à partir des bandes associées dans les cellules (64) situées sur les côtés opposés de la paire respective de bandes, les ressorts dans chaque paire de ressorts ayant une forme leur permettant de prendre normalement des positions étendues dans lesquelles ils sont éloignés l'un de l'autre pour s'engrener avec des barres de combustible lorsqu'elles sont reçues dans les cellules respectives, et pouvant s'infléchir pour prendre des positions rétractées dans lesquelles ils sont déplacés l'un vers l'autre afin de permettre aux barres de combustible d'être insérées dans les cellules respectives sans venir en contact physique avec lesdits ressorts, **caractérisé** en ce que ledit appareil (66) de maintien de ressort comporte une pluralité de barres (70) de support allongées supportant chacune une pluralité d'éléments allongés (74) qui s'étendent depuis la barre de support associée en relation d'espacement essentiellement parallèles les uns par rapport aux autres, chacun de ces éléments allongés se terminant par une partie d'extrémité fourchue (76) définissant au moins une paire de doigts (78, 80) adaptés pour recevoir entre ceux-ci, et pour maintenir dans ladite position rétractée, une paire desdits ressorts (60), lesdites barres de support (70) pouvant être positionnées chacune le long d'un bord longitudinal d'une des paires de bandes (52) et de façon à pouvoir être espacées latéralement des positions occupées par les barres de combustible lorsqu'elles sont reçues dans les cellules adjacentes, et les éléments allongés (74) sur chaque barre de support étant espacés les uns des autres de façon à pouvoir être alignés, lors du positionnement de la barre de support le long de l'une des paires de bandes, les paires respectives de ressorts (60) sur celles-ci permettant l'engrènement des parties d'extrémité fourchues (76) desdits éléments allongés (74) avec lesdites paires respectives de ressort (60) et la rétention de ces dernières dans lesdites positions rétractées de celles-ci.

2. Appareil de maintien de ressort selon la revendication 1, **caractérisé** en ce que la partie d'extrémité fourchue (76) de chaque élément allongé (74) définit deux paires desdits doigts (78, 80), lesdites deux paires de doigts étant espacées l'une de l'autre de façon à s'engrener avec la paire associée de ressorts (60) en deux emplacements éloignés l'un de l'autre le long des ressorts.

3. Appareil de maintien de ressort selon la revendication 1 ou 2, **caractérisé** en ce que les doigts de chacune desdites paires de doigts (78, 80) sont effilées de façon divergente au voisinage des extrémités distales de ceux-ci de façon à définir une entrée effilée convergente (84) vers l'espace (82) entre les doigts.

4. Appareil de maintien de ressort selon la revendication 3, **caractérisé** en ce que les doigts (78, 80) de chacune desdites paires sont effilés de façon divergente d'un angle tel qu'il infléchisse la paire de ressorts (60) reçue entre ceux-ci jusqu'à ladite position rétractée de celle-ci.

5. Appareil de maintien de ressort selon la revendication 1, 2, 3 ou 4, **caractérisé** en ce que ladite pluralité de barres (70) de support allongées, divisées en deux groupes formant deux ensembles (68A, 68B) de maintien de ressort, chacun contenant une barre de manipulation (72) qui interconnecte les barres de support (70) de l'ensemble (68A ou 68B) de maintien de ressort associé, chacune à une extrémité de celui-ci, et qui maintient lesdites barres de support en relation d'espacement substantiellement parallèle l'une par rapport à l'autre, cet espacement correspondant essentiellement à la relation d'espacement parallèle entre les bandes de grille (52), les barres de support (70) des deux ensembles (68A, 68B) de maintien de ressort ayant des moyens d'accouplement (88, 90) qui permettent auxdites barres de support d'être positionnées l'une par rapport à l'autre, et qui permettent par conséquent auxdits ensembles de maintien de ressort d'être appliqués à ladite grille d'espacement (50), d'une façon entrecroisée qui permet l'engrènement des parties d'extrémité fourchue (76) desdits éléments allongés (74) avec toutes les paires de ressorts (60) formées sur les bandes (52) de la grille d'espacement.

6. Appareil de maintien de ressort selon la revendication 5, **caractérisé** en ce que lesdits moyens d'accouplement (88, 90) sont des encoches formées dans les barres de support (70) des ensembles (68A, 68B) de maintien de ressort respectifs en des emplacements permettant aux encoches dans les barres de support d'un ensemble de maintien de ressort d'être alignés avec les encoches dans les barres de support de l'autre ensemble de maintien de support, et permettant par conséquent aux barres de support des deux ensembles de maintien de ressort d'être accouplées de ladite façon entrecroisée.

**Ansprüche**

1. Federrückhaltevorrichtung zur Erleichterung des Einsetzens von Brennstäben in ein Kernbrennelement, welches mindestens ein aus ineinandergreifenden Streifen (52, 54) zusammengesetztes Brennstab-Haltegitter (50) aufweist, welche eine Mehrzahl von offenen Zellen (64) zur Aufnahme jeweils eines Brennstabs (42) bilden, wobei mindestens einige dieser Streifen (52) benachbart nebeneinanderliegend gepaart sind und Federn (60) haben, welche mit den Rückseiten nebeneinanderliegend gepaart sind und vom jeweiligen Streifen in die an gegenüberliegenden Seiten des jeweiligen Streifenpaars befindlichen Zellen (64) hervorstehen, wobei die Federn aller Federpaare derart geformt sind, daß sie normalerweise aufgeweitete Positionen einnehmen, in welchen sie voneinander entfernt liegen, um auf in entsprechende Zellen aufgenommene Brennstäbe einzuwirken, und wobei die Federn in zusammengezogene Positionen biegbar sind, in welchen sie einander zugewandt liegen, um das Einführen von Brennstäben in die jeweiligen Zellen ohne Berührung mit den Federn zu ermöglichen, dadurch gekennzeichnet, daß die Federrückhaltevorrichtung (66) eine Mehrzahl von länglichen Haltestäben (70) aufweist, von denen jeder eine Mehrzahl von länglichen Elementen (74) trägt, welche sich vom entsprechenden Haltestab aus im wesentlichen parallel zueinander und mit Abstand voneinander erstrecken und jeweils in einem gegabelten Endbereich (76) endigen, welcher mindestens ein Fingerpaar (78, 80) bildet, welches zur Aufnahme eines Federpaars (60) zwischen den Fingern und zum Halten desselben in der zusammengezogenen Position angepaßt ist, wobei die Haltestäbe (70) jeweils entlang einer Längskante eines Streifenpaars (52) und derart positionierbar sind, daß sie von den Positionen von in den benachbarten Zellen aufgenommenen Brennstäben mit seitlichem Abstand angeordnet sind, und wobei die an jedem Haltestab angebrachten länglichen Elemente (74) mit Abstand voneinander derart angeordnet sind, daß sie bei Positionierung des Haltestabs entlang eines der Streifenpaare mit den entsprechenden daran angebrachten Federpaaren (60) ausrichtbar sind, um das Eingreifen der gegabelten Endbereiche (76) der länglichen Elemente (74) auf die entsprechenden den Federpaare (60) und das Halten derselben in deren zusammengezogenen Positionen zu ermöglichen.

2. Federrückhaltevorrichtung nach Anspruch 1, dadurch gekennzeichnet, daß die gegabelten Endbereiche (76) der länglichen Elemente (74) jeweils zwei Fingerpaare (78, 80) bilden, wobei die beiden Fingerpaare derart mit Abstand voneinander angeordnet sind, daß sie auf das entsprechende Federpaar (60) an zwei entlang der Federn versetzten Stellen eingreifen.

3. Federrückhaltevorrichtung nach Anspruch 1 oder 2, dadurch gekennzeichnet, daß die Finger des bzw. der Fingerpaare (78, 80) an deren distalen Enden derart divergierend angeschrägt sind, daß ein divergierend schräg zulaufender Eingang (84) in den Zwischenraum (82) zwischen den Fingern gebildet wird.

4. Federrückhaltevorrichtung nach Anspruch 3, dadurch gekennzeichnet, daß die Finger (78, 80) des bzw. der Fingerpaare jeweils mit einem solchen Winkel divergierend angeschrägt sind, daß die dazwischen aufgenommenen Federpaare (60) in deren zusammengezogene Position biegbar sind.

5. Federrückhaltevorrichtung nach Anspruch 1, 2, 3 oder 4, dadurch gekennzeichnet, daß die Mehrzahl der länglichen Haltestäbe (70) in zwei Gruppen geteilt ist, welche zwei Federrückhalteeinrichtungen (68A, 68B) bilden, welche jede eine Griffstange (72) aufweist, welche die Haltestäbe (70) der jeweiligen Federrückhalteeinrichtung (68A oder 68B) jeweils an einem Ende derselben miteinander verbindet und die Haltestäbe im wesentlichen der parallelen Anordnung der Gitterstreifen (52) entsprechend mit Abstand voneinander und parallel zueinander hält, wobei die Haltestäbe (70) der beiden Federrückhalteeinrichtungen (68A, 68B) Mittel (88, 90) zum Zusammenstecken aufweisen, wodurch die Haltestäbe unter Ermöglichung des Eingriffs der Federrückhalteeinrichtungen auf das Haltegitter (50) sich gegenseitig überkreuzend positionierbar sind, was den Eingriff der gegabelten Endbereiche (76) der länglichen Elemente (74) auf sämtliche an den Streifen (52) des Haltegitters gebildeten Federpaare (60) ermöglicht.

6. Federrückhaltevorrichtung nach Anspruch 5, dadurch gekennzeichnet, daß die Mittel (88, 90) zum Zusammenstecken Aussparungen sind, welche in den Haltestäben (70) der entsprechenden Federrückhalteeinrichtungen (68A, 68B) an solchen Stellen gebildet sind, daß die Aussparungen in den Haltestäben der einen Federrückhalteeinrichtung mit den Aussparungen in den Haltestäben der anderen Federrückhalteeinrichtung ausrichtbar sind, so daß die Haltestäbe der beiden Federückhalteeinrichtungen in der sich überkreuzenden Weise zusammensteckbar sind.

FIG. I.

FIG. 2.

FIG. 3.

FIG. 4.

FIG. 5.

FIG. 6.

FIG. 7.

FIG. 8.

FIG. 9.

14

FIG. IO.

FIG. II.

FIG. 12.

FIG. 13.

FIG. 14.

FIG. 15.

EP 0 251 317 B1

FIG. 16.

FIG. 17.

70    82  82      88            88      68A                72

FIG. 18.

74    78  80      74

76    82

74

80            80

84

FIG. 19.

76

60            74

60            60

82

80            80

84

60            60

FIG. 20.

76'

74'

82'

84'

FIG. 22.

86

FIG. 21.